**Europäisches Patentamt**

**European Patent Office**

**Office européen des brevets**

(19)

(11) Numéro de publication: **0 092 461**
**B1**

(12) **FASCICULE DE BREVET EUROPEEN**

(45) Date de publication du fascicule du brevet:
14.08.85

(51) Int. Cl.⁴: **G 21 C 13/06**

(21) Numéro de dépôt: **83400712.2**

(22) Date de dépôt: **08.04.83**

(54) **Dalle de fermeture annulaire de la cuve d'un réacteur nucléaire à neutrons rapides.**

(30) Priorité: **08.04.82 FR 8206125**

(43) Date de publication de la demande:
**26.10.83 Bulletin 83/43**

(45) Mention de la délivrance du brevet:
**14.08.85 Bulletin 85/33**

(84) Etats contractants désignés:
**BE DE GB IT NL**

(56) Documents cités:
**FR - A - 1 536 347**

**NUCLEAR ENGINEERING INTERNATIONAL, vol. 23, no. 272, juin 1978, pages 43-60 "Construction of the world's first full-scale fast breeder reactor"**

(73) Titulaire: **NOVATOME, 20 Avenue Edouard Herriot, F-92350 Le Plessis Robinson (FR)**

(72) Inventeur: **Malaval, Claude, 115 bis avenue du Bois de Verrières, F-92160 Antony (FR)**

(74) Mandataire: **Moncheny, Michel et al, c/o Cabinet Lavoix 2 Place d'Estienne d'Orves, F-75441 Paris Cedex 09 (FR)**

ACTORUM AG

## Description

L'invention concerne une dalle de fermeture annulaire de la cuve d'un réacteur nucléaire à neutrons rapides.

Les réacteurs nucléaires à neutrons rapides comportent généralement une structure en béton comportant un puits de cuve cylindrique à axe vertical à l'intérieur duquel est disposée la cuve principale du réacteur entourée par la cuve de sécurité et fermée par la dalle qui repose sur la partie supérieure du puits de cuve. La cuve principale et la cuve de sécurité du réacteur sont suspendues à la partie inférieure de la dalle qui est constituée par une structure composite en acier et en béton.

Cette structure est constituée par une enveloppe annulaire remplie de béton ménageant à sa partie centrale un espace cylindrique pour permettre à la dalle de recevoir le grand bouchon tournant portant l'ensemble des dispositifs de manutention des assemblages combustibles constituant le cœur du réacteur disposé à l'intérieur de la cuve.

L'enveloppe annulaire est constituée par deux viroles cylindriques coaxiales et par deux semelles annulaires reliées à chacune des viroles à leur partie supérieure et à leur partie inférieure, respectivement.

Des emplacements cylindriques sont ménagés à l'intérieur de l'enveloppe par des viroles traversant la dalle sur toute son épaisseur et débouchant au niveau d'ouvertures circulaires prévues dans les semelles supérieure et inférieure de la dalle. Le remplissage de béton occupe le volume intérieur de l'enveloppe à l'exception de ces espaces cylindriques permettant le passage des composants du réacteur plongeant par leur partie inférieure dans la cuve, tels que les pompes primaires et les échangeurs intermédiaires.

Des raidisseurs de direction radiale permettent un assemblage rigide des viroles cylindriques, des semelles supérieure et inférieure et des viroles de passage des composants. Ces divers éléments sont reliés entre eux par soudure.

La virole cylindrique externe de l'enveloppe de la dalle sert à la fixation de celle-ci au-dessus du puits de cuve. Une virolle de même diamètre est en effet fixée à la partie supérieure du puits de cuve et la liaison de la virole externe de la dalle sur cette virole de support permet la fixation de la dalle.

La cuve du réacteur est destinée à contenir le fluide primaire maintenu à haute température par la chaleur dégagée par le cœur. Ce fluide primaire est généralement du sodium liquide.

Les parties de la dalle dirigées vers l'intérieur de la cuve, c'est-à-dire la semelle inférieure et les fourreaux de passage des composants, doivent donc être refroidies pour limiter leur échauffement et éviter un abaissement de leur résistance mécanique. On place donc, au contact de la semelle inférieure et des fourreaux de passage de composants, des tubes de refroidissement à l'intérieur desquels on établit une circulation d'eau, ces tubes de refroidissement étant noyés dans le béton de remplissage de la dalle.

En outre, la semelle inférieure est protégée de la chaleur du fluide primaire par un calorifuge.

Les dilatations de la dalle sont donc limitées et il est ainsi possible de la raccorder à la virole de support solidaire du puits de cuve.

Lorsque le grand bouchon tournant repose dans son logement au centre de la dalle annulaire, son poids extrêmement important est entièrement supporté par la dalle dont la semelle supérieure travaille en compression et la semelle inférieure en traction.

L'ensemble de la structure métallique de la dalle comportant la virole externe, la virole interne, les semelles supérieure et inférieure, les fourreaux de passage des composants et les raidisseurs verticaux de direction radiale doit donc présenter une très grande résistance et une très grande rigidité.

En particulier, pour transmettre les efforts de cisaillement sans discontinuité, les raidisseurs doivent être très rapprochés, si bien que le volume interne de l'enveloppe de la dalle est extrêmement morcelé. Le béton de remplissage ne participe donc pratiquement pas à la résistance de l'ensemble et sert uniquement de protection contre les radiations des matériaux contenus à l'intérieur de la cuve.

La structure métallique de la dalle est extrêmement lourde, coûteuse et difficile à souder, cette structure étant encore rendue plus complexe par le fait qu'il faut prévoir des tubes de refroidissement au contact des fourreaux de passage des composants et au contact de la semelle inférieure qui supporte des contraintes très importantes. Ces tuyaux de refroidissement doivent traverser les raidisseurs radiaux dans lesquels il faut prévoir de nombreuses ouvertures.

Le but de l'invention est donc de proposer une dalle de fermeture annulaire de la cuve d'un réacteur nucléaire à neutrons rapides dont la structure en béton comporte un puits de cuve cylindrique à axe vertical sur la partie supérieure duquel repose horizontalement la dalle constituée par une structure composite en acier et en béton qui elle-même porte la cuve suspendue à sa partie inférieure et qui comporte une enveloppe annulaire constituée par deux viroles cylindriques coaxiales et deux semelles annulaires reliées entre elles directement et par l'intermédiaire d'un ensemble de raidissement, remplie de béton à l'exception d'espaces cylindriques d'axes parallèles à l'axe des viroles et traversant la dalle sur toute son épaisseur pour le passage des composants du réacteur plongeant dans la cuve, cette dalle présentant une grande résistance et une grande rigidité malgré une structure simple, une plus grande facilité de réalisation et une masse moins importante.

Dans ce but, la dalle comporte, à l'intérieur de l'enveloppe, comme élément de raidissement, au moins une virole tronconique coaxiale aux viroles limitant la dalle reliée par soudure à l'enveloppe le long de sa petite base, au voisinage de la partie supérieure de cette enveloppe et le long de sa grande base, au voisinage de la partie inférieure de celle-ci, percée d'ouvertures pour le passage des composants et partageant le volume interne de l'enveloppe en deux parties superposées.

Selon un mode de réalisation préférentiel de l'invention, la partie supérieure du volume interne de l'enveloppe, au-dessus de la virole tronconique, est remplie de béton incorporant des armatures métalliques de renforcement et constituant une structure résistante continue sur toute la périphérie de la dalle.

Afin de bien faire comprendre l'invention, on va maintenant décrire à titre d'exemples non limitatifs, en se référant aux figures jointes en annexe, un mode de réalisation d'une dalle suivant l'art antérieur et un mode de réalisation d'une dalle suivant l'invention.

La fig. 1 représente, dans une vue en coupe par un plan vertical, suivant AA de la fig. 2, une dalle suivant l'art antérieur en position sur un réacteur nucléaire à neutrons rapides.

La fig. 2 représente une demi-vue de dessus de la dalle représentée à la fig. 1.

La fig. 3 représente une vue en coupe, suivant BB de la fig. 4, d'une dalle suivant l'invention en position sur le puits de cuve d'un réacteur nucléaire à neutrons rapides.

La fig. 4 représente une demi-vue de dessus de la dalle représentée à la fig. 3.

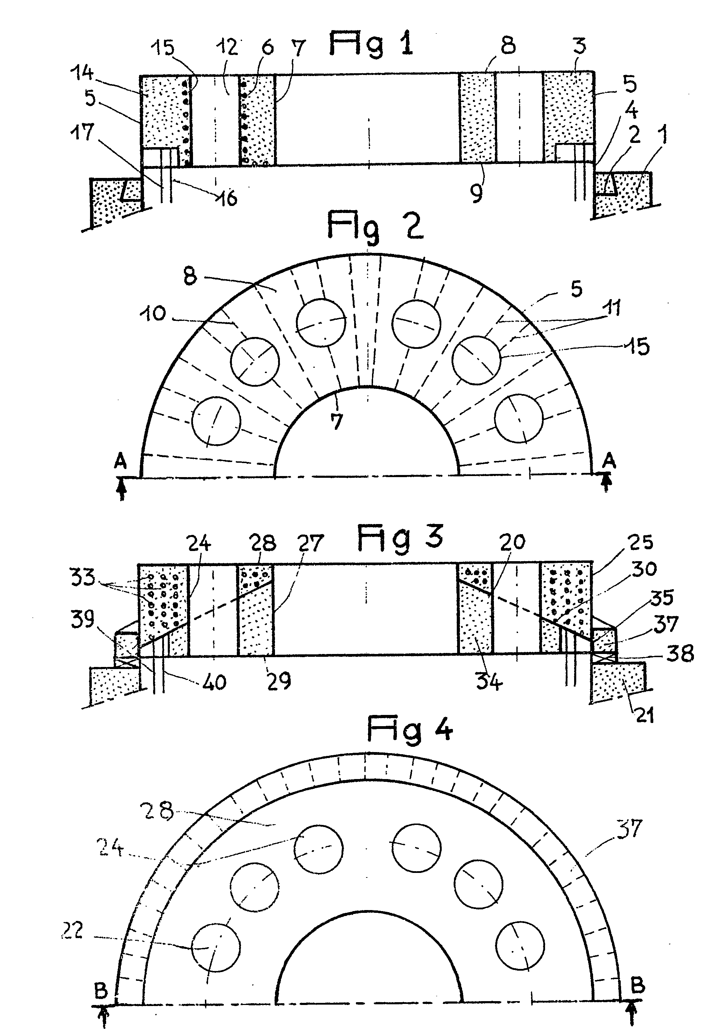

Sur la fig. 1 on voit le puits de cuve 1 d'un réacteur nucléaire à neutrons rapides comportant à sa partie supérieure un dispositif d'ancrage 2 d'une virole de support 4 dont le diamètre correspond au diamètre intérieur du puits de cuve et au diamètre extérieur de la dalle 3.

Ainsi qu'il est visible sur les fig. 1 et 2, la dalle comporte une virole externe 5 de même diamètre que la virole de support 4 sur laquelle elle est fixée par soudure et une virole interne 7 coaxiale à la virole 5. Ces viroles 5 et 7 sont reliées par soudure à une semelle supérieure annulaire 8 et à une semelle inférieure annulaire 9, l'ensemble des viroles 5 et 7 et des semelles 8 et 9 constituant l'enveloppe de la dalle.

Les viroles cylindriques et les semelles sont également reliées entre elles par des raidisseurs verticaux 10 de direction radiale.

Le volume interne de l'enveloppe est rempli par du béton 14 à l'exception d'espaces verticaux cylindriques 12 ménagés grâce à des fourreaux cylindriques 15 à l'intérieur de l'enveloppe de la dalle. Ces espaces cylindriques 12 traversant toute l'épaisseur de la dalle permettent le passage des composants du réacteur nucléaire plongeant dans la cuve, tels que les pompes ou les échangeurs intermédiaires. Les fourreaux 15 sont reliés par soudure aux semelles 8 et 9 qui comportent des ouvertures circulaires correspondant à ces fourreaux et à la virole externe 5, par l'intermédiaire de raidisseurs verticaux de direction radiale 11.

L'ensemble des raidisseurs 10, des fourreaux 15 et des raidisseurs 11 assure le raidissement de l'enveloppe de la dalle.

On voit que le volume interne de cette dalle est fortement morcelé et que le béton 14 ne peut ainsi constituer une structure résistante sur toute la périphérie de la dalle.

D'autre part, les tubes de refroidissement 6 des fourreaux 15 et de la semelle inférieure 9 doivent traverser de nombreux raidisseurs verticaux lors de leur parcours.

La cuve principale 16 et la cuve de sécurité 17 du réacteur sont constitué par une virole cylindrique de grand diamètre dont la partie supérieure visible sur la fig. 1 est fixée à l'intérieur de la dalle pour la suspension de ces cuves et par un fond bombé comportant plusieurs éléments de forme sphérique.

La partie inférieure de la virole cylindrique et les fonds bombés des cuves n'ont pas été représentés sur la fig. 1 à l'intérieur du puits de cuve.

Sur la fig. 3 on voit une dalle selon l'invention 20 reposant sur la partie supérieure du puits de cuve 21.

Ainsi qu'il est visible sur les fig. 3 et 4, cette dalle 20 comporte une enveloppe constituée par une virole externe 25 et une virole interne 27 coaxiales, une semelle supérieure 28 et une semelle inférieure 29. Des fourreaux de passage des composants 24 sont disposés à l'intérieur de cette enveloppe au niveau d'ouvertures 22 prévues dans les semelles supérieure et inférieure de l'enveloppe.

L'ensemble de raidissement de l'enveloppe est constitué par une simple virole tronconique 30 coaxiale aux viroles 25 et 27.

La virole tronconique 30 est reliée par soudure le long de sa petite base à la virole cylindrique interne 27, au voisinage de la partie supérieure de la dalle. La virole 30 est également reliée par soudure le long de sa grande base à la virole externe 25, au voisinage de la partie inférieure de la dalle.

La virole 30 est percée d'ouvertures permettant le passage des fourreaux 24 et soudée à ces fourreaux 24 suivant le contour de ces ouvertures.

La virole tronconique 30 sépare le volume interne de l'enveloppe de la dalle en deux parties superposées, l'une se trouvant en dessous de la virole 30 et l'autre au-dessus de cette virole. La partie située en dessous de la virole 30 est remplie par du béton de protection radiologique 34 grâce à des ouvertures de remplissage traversant la virole 30.

La partie supérieure du volume interne de l'enveloppe, au-dessus de la virole tronconique 30, est remplie par du béton incorporant des armatures métalliques 33 disposées en particulier suivant des parcours concentriques dans tout le volume interne de la dalle. De cette façon, le béton armé remplissant cette partie de la dalle participe de façon importante à la résistance de celle-ci.

La virole externe 25 est renforcée à sa partie inférieure 35 où se raccorde la grande base de la virole tronconique 30.

Sur la surface extérieure de cette partie renforcée de la virole 25 est fixée une structure de support 37 constituée par une ceinture annulaire à section carrée. Cette structure annulaire 37 est constituée par une enveloppe en acier soudée sur la virole externe 25 dans sa partie renforcée, remplie de béton. La structure de support 37 repose sur un appui glissant 38 porté par la partie supérieure du puits de cuve 21.

La cuve principale 40 et la cuve de sécurité 39 sont fixées par leur partie supérieure sur la virole tronconique 30, si bien qu'elles sont suspendues sous la dalle 20.

Lorsque la dalle est chargée à sa partie centrale, dans le puits ménagé par la virole 27 où l'on dispose le grand bouchon tournant, la charge due à ce bouchon tournant et aux dispositifs de manutention des assemblages combustibles qu'il supporte, la répartition des contraintes dans la dalle est très différente de la répartition dans le cas d'une dalle selon l'art antérieur telle que représentée sur la fig. 1. En effet, le poids du grand bouchon tournant et des composants portés par la dalle se traduit par des forces de compression s'exerçant sur la semelle supérieure de la dalle et sur la partie supérieure de la virole tronconique alors que les forces de traction s'exerçant sur la partie inférieure de la virole tronconique sont reprises par la partie renforcée de la virole externe 25 et par la structure d'appui 37.

D'autre part, les forces de traction s'exerçant sur la semelle inférieure de la dalle sont de très faible amplitude.

La partie de la dalle se trouvant en dessous de la virole tronconique 30 subit des contraintes très faibles et dans cette zone le volume interne de l'enveloppe de la dalle est rempli par du béton de protection radiologique.

En revanche, la partie du volume interne de l'enveloppe de la dalle située au-dessus de la virole tronconique 30 est remplie par du béton incorporant des armatures métalliques disposées en particulier de façon concentrique dans la dalle.

Ce béton armé assure la tenue mécanique de la dalle en même temps que les viroles, les semelles, les fourreaux et la virole tronconique servant de raidisseur.

Il est donc possible de diminuer l'épaisseur des éléments métalliques constituant l'enveloppe de la dalle et en particulier de diminuer l'épaisseur de la semelle inférieure qui ne subit que des contraintes de faible amplitude.

La virole tronconique 30 qui est noyée dans le béton de protection ne peut pas se déformer par flambage si bien qu'il est possible d'utiliser pour sa fabrication une tôle d'épaisseur modérée et qu'on peut éviter de la renforcer.

Le fait de renforcer la virole externe 25 dans sa partie inférieure et d'entourer cette virole par la structure d'appui 37 permet de reprendre les efforts radiaux et d'avoir la ligne neutre des déformations de la dalle le plus près possible des appuis.

Enfin, le fait de souder les fourreaux 24 à la virole tronconique 30, celle-ci étant elle-même fixée sur les viroles externe et interne 25 et 27, permet de reprendre une partie des efforts de cisaillement.

Les principaux avantages de la dalle suivant l'invention sont de permettre d'obtenir une grande résistance mécanique et une grande rigidité de celle-ci avec une structure beaucoup plus simple, plus facile à réaliser et d'un poids moins important.

D'autre part, la nouvelle structure de la dalle suivant l'invention permet de faire reposer celle-ci sur la partie supérieure du puits de cuve et d'éviter de la relier à une virole de support solidaire du puits de cuve, par une soudure exposée à la chaleur du fluide primaire.

Une partie du béton de remplissage de la dalle participe à l'obtention d'une bonne résistance mécanique et d'une grande rigidité de celle-ci.

Le fait d'éviter l'utilisation de raidisseurs verticaux de direction radiale sur toute la hauteur de la dalle permet de disposer les tubes de refroidissement de la semelle inférieure et des fourreaux de passage des composants facilement, sans avoir à prévoir des perforations dans les raidisseurs.

L'invention ne se limite pas au mode de réalisation qui vient d'être décrit; c'est ainsi que la virole tronconique peut être soudée à ses extrémités sur les semelles supérieure et inférieure au lieu d'être soudée sur les viroles externe et interne.

La virole tronconique peut être soudée à l'une de ses extrémités sur l'une des semelles et à son autre extrémité sur l'une des viroles.

Il est également possible d'utiliser à la place d'une virole tronconique unique un ensemble constitué par au moins deux viroles tronconiques coaxiales séparées par une distance constante soudées aux viroles ou aux semelles.

On peut également imaginer un ensemble raidisseur constitué par au moins deux viroles tronconiques coaxiales et séparées par une distance constante c'est-à-dire ayant un même angle au sommet, et reliées entre elles par des entretoises. On peut également imaginer une ou plusieurs viroles tronconiques comportant des renforts pour éviter leur flambage, bien que le béton entourant ces viroles de raidissement en empêche pratiquement la déformation.

Enfin, la dalle suivant l'invention s'applique à tous les réacteurs nucléaires à neutrons rapides comportant une dalle annulaire dont la partie centrale supporte un ensemble pesant tel qu'un bouchon tournant de manutention des assemblages combustibles.

## Revendications

1. Dalle de fermeture annulaire de la cuve d'un réacteur nucléaire à neutrons rapides dont la structure en béton comporte un puits de cuve cylindrique (21) à axe vertical sur la partie supérieure duquel repose horizontalement la dalle (20) constituée par une structure composite en acier et en béton qui elle-même porte la cuve (40) suspendue à sa partie inférieure et qui comporte une enveloppe annulaire constituée par deux viroles cylindriques coaxiales (25, 27) et deux semelles annulaires (28, 29) reliées entre elles directement et par l'intermédiaire d'un ensemble de raidissement, remplie de béton à l'exception d'espaces cylindriques (24) d'axes parallèles à l'axe des viroles (25, 27) et traversant la dalle (20) sur toute son épaisseur, pour le passage des composants du réacteur plongeant dans la cuve (40), caractérisée par le fait qu'elle comporte, à l'intérieur de l'enveloppe, comme élément de raidissement, au moins une virole tronconique (30) coaxiale aux viroles (25, 27) limitant la dalle (20) reliée par soudure à l'enveloppe le long de sa petite base, au voisinage de la partie supérieure de cette enveloppe et le long de sa grande base, au voisinage de la partie inférieure de celle-ci, percée d'ouvertures (22) pour le passage des composants et partageant le volume interne de l'enveloppe en deux parties superposées.

2. Dalle de fermeture suivant la revendication 1, caractérisée par le fait que la partie supérieure de l'enveloppe au-dessus de la virole tronconique (30) est remplie de béton incorporant des armatures métalliques de renforcement (33) et constituant une structure résistante continue sur toute la périphérie de la dalle (20).

3. Dalle de fermeture suivant l'une quelconque des revendications 1 et 2, caractérisée par le fait que la virole tronconique (30) est fixée à sa partie inférieure sur la surface inférieure de la virole externe (25) de l'enveloppe, dans une partie (35) de celle-ci qui est renforcée et entourée vers l'extérieur par une structure de renforcement et de support (37) permettant de faire reposer la dalle (20) sur la partie supérieure du puits de cuve (21).

4. Dalle de fermeture suivant l'une quelconque des revendications 1, 2 et 3, modifiée en ce que l'élément de raidissement (30) est constitué par au moins deux viroles tronconiques de même angle disposées coaxialement avec un espacement constant.

5. Dalle de fermeture suivant la revendication 4, caractérisée par le fait que des entretoises ou des renforts sont disposés entre les viroles tronconiques.

6. Dalle de fermeture suivant l'une quelconque des revendications 1, 2 et 3, caractérisée par le fait que la virole tronconique (30) est soudée à son extrémité inférieure à la virole externe (25) de l'enveloppe et à son extrémité supérieure à la virole interne (27) de celle-ci.

7. Dalle de fermeture suivant l'une quelconque des revendications 1, 2 et 3, caractérisée par le fait que la virole tronconique (30) est soudée à son extrémité inférieure à la semelle inférieure (20) et à son extrémité supérieure à la semelle supérieure (28) de l'enveloppe.

8. Dalle de fermeture suivant l'une quelconque des revendications 1, 2 et 3, caractérisée par le fait que la virole tronconique est soudée à l'une de ses extrémités sur l'une des viroles cylindriques (25, 27) de l'enveloppe et à son autre extrémité sur l'une des semelles (28, 29) de cette enveloppe.

**Patentansprüche**

1. Kreisförmige Verschlussplatte für den Druckbehälter eines schnellen Neutronenkernreaktors, dessen Struktur aus Beton einen zylindrischen Behälterschacht (21) mit senkrechter Achse aufweist, auf dessen oberteil eine aus einer Stahl-Beton-Verbundstruktur bestehende Platte (20) horizontal aufliegt, die ihrerseits den an ihrem Unterteil aufgehängten Behälter (40) trägt, und die aus einer kreisförmigen Ummantelung mit je zwei koaxial angeordneten, direkt miteinander und über ein Aussteifungssystem verbundenen Zylindermänteln (25, 27) und kreisförmigen Sohlplatten (28, 29) besteht, wobei diese kreisförmige Ummantelung mit Beton ausgefüllt ist mit Ausnahme für den Durchtritt der in den Behälter (40) eingeführten Reaktorkomponenten vorgesehenen zylinderförmiger Räume (24), deren Achsen parallel zur Achse der Mäntel (25, 27) sind, und die sich über die gesamte Höhe der Platte (20) erstrecken, dadurch gekennzeichnet, dass sie als Aussteifung innen in der Ummantelung einen kegelstumpfförmigen zu den die Platte (20) begrenzenden Mäntel (25, 27) koaxialen Mantel (30) umfasst, der mit seiner kleinen Basis bei dem oberteil der Ummantelung und mit seiner grossen Basis bei dem Unterteil derselben mit dieser Ummantelung zusammengeschweisst ist, wobei zum Durchtritt der Komponenten dieser Mantel Öffnungen (22) aufweist und den Innenraum der Ummantelung in zwei übereinanderliegende Teile unterteilt.

2. Verschlussplatte nach Anspruch 1, dadurch gekennzeichnet, dass das Oberteil der Ummantelung über dem kegelstumpfartigen Mantel (30) mit Beton gefüllt ist und zur Verstärkung Stahlbewehrungen (33) darin eingelassen sind, wobei eine widerstansfähige durchgehende Struktur über die gesamte Peripherie der Platte (20) hin somit gebildet wird.

3. Verschlussplatte nach einem der Ansprüche 1 und 2, dadurch gekennzeichnet, dass der kegelstumpfartige Mantel (30) mit seinem Unterteil auf der unteren Fläche des Aussenmantels (25) der Ummantelung an einem Teil (35) derselben befestigt ist, das verstärkt und nachaussen hin von einer Verstärkungs und Stützstruktur (37) umgeben ist, wodurch die Platte (20) auf dem Oberteil des Behälterschachtes (21) aufliegen kann.

4. Verschlussplatte nach einem der Ansprüche 1, 2 und 3, dadurch abgeändert, dass das Versteifungselement (30) aus mindestens zwei kegelstumpfartigen mit gleichbleibendem Abstand koaxial angeordneten winkelgleichen Mänteln besteht.

5. Verschlussplatte nach Anspruch 4, dadurch gekennzeichnet, dass Querstreben oder Verstärkungen zwischen den kegelstumpfartigen Mäntel angeordnet sind.

6. Verschlussplatte nach einem der Ansprüche 1, 2 und 3, dadurch gekennzeichnet, dass der kegelstumpfartige Mantel (30) an seinem unteren Ende mit dem Aussenmantel (25) der Ummantelung und an seinem oberen Ende mit dem Innenmantel (27) derselben zusammengeschweisst ist.

7. Verschlussplatte nach einem der Ansprüche 1, 2 und 3, dadurch gekennzeichnet, dass der kegelstumpfartige Mantel (30) an seinem unteren Ende mit der unteren Sohlplatte (20) und an seinem oberen Ende mit der oberen Sohlplatte (28) der Ummantelung zusammengeschweisst ist.

8. Verschlussplatte nach einem der Ansprüche 1, 2 und 3, dadurch gekennzeichnet, dass der kegelstumpfartige Mantel an einem Ende mit einem Zylindermantel (25, 27) der Ummantelung und an seinem anderen Ende mit einer Sohlplatte (28, 29) dieser Ummantelung zusammengeschweisst ist.

## Claims

1. Annular closure slab for the vessel of a fast-neutron nuclear reactor the concrete structure of which incorporates a cylindrical vessel well (21) with a vertical axis on the upper part of which rests horizontally the slab (20) consisting of a composite structure made of steel and concrete which itself carries the vessel (40) suspended from its lower part and which comprises an annular enclosure consisting of two coaxial cylindrical shells (25, 27) and two annular sole-plates (28, 29) joined together directly and through the intermediacy of a stiffening assembly, filled with concrete except for cylindrical spaces (24) with axes parallel to the axis of the shells (25, 27) and passing through the slab (20) over its entire thickness, for the passage of the reactor components immersed in the vessel (40), characterised in that it comprises, inside the enclosure, as a stiffening member, at least one frustoconical shell (30) coaxial with the shells (25, 27) bounding the slab (20) and connected by welding to the enclosure along its small base, in the vicinity of the upper part of this enclosure and along its large base, in the vicinity of the lower part of the latter, pierced with openings (22) for the passage of the components and dividing the inner volume of the casing into two superposed parts.

2. Closure slab according to Claim 1, characterised in that the upper part of the enclosure above the frustoconical shell (30) is filled with concrete incorporating metal strengthening frames (33) and forming a continuous strong structure over the whole periphery of the slab (20).

3. Closure slab according to either of Claims 1 and 2, characterised in that the frustoconical shell (30) is fixed at its lower part on the lower surface of the outer shell (25) of the enclosure, in a part (35) of the latter which is strengthened and surrounded externally by a strengthening and supporting structure (37) enabling the slab (20) to rest on the upper part of the vessel well (21).

4. Closure slab according to any one of Claims 1, 2 and 3, modified in that the stiffening member (30) consists of at least two frustoconical shells with the same angle which are arranged coaxially with a constant spacing.

5. Closure slab according to Claim 4, characterised in that braces or reinforcements are arranged between the frustoconical shells.

6. Closure slab according to any one of Claims 1, 2 and 3, characterised in that the frustoconical shell (30) is welded at its lower end to the outer shell (25) of the enclosure and at its upper end to the inner shell (27) of the latter.

7. Closure slab according to any one of Claims 1, 2 and 3, characterised in that the frustoconical shell (30) is welded at its lower end to the lower sole plate (20) and at its upper end to the upper sole plate (28) of the enclosure.

8. Closure slab according to any one of Claims 1, 2 and 3, characterised in that the frustoconical shell is welded at one of its ends to one of the cylindrical shells (25, 27) of the enclosure and at its other end to one of the sole plates (28, 29) of this enclosure.

Fig 1

Fig 2

Fig 3

Fig 4